Europäisches Patentamt

**European Patent Office**

Office européen des brevets

(19)

(11) Publication number: **0 182 478**
A2

# EUROPEAN PATENT APPLICATION

(12)

(21) Application number: **85307047.2**

(22) Date of filing: **02.10.85**

(51) Int. Cl.⁴: **B 60 G 15/06**

(30) Priority: **15.11.84 US 671726**

(43) Date of publication of application: **28.05.86
Bulletin 86/22**

(71) Applicant: **FORD MOTOR COMPANY LIMITED, Eagle
Way, Brentwood Essex CM13 3BW (GB)**

(84) Designated Contracting States: **GB**

(71) Applicant: **FORD-WERKE AKTIENGESELLSCHAFT,
Ottoplatz 2 Postfach 21 03 69, D-5000 Köln 21 (DE)**

(84) Designated Contracting States: **DE**

(71) Applicant: **FORD FRANCE SOCIETE ANONYME,
344 Avenue Napoléon Bonaparte B.P. 307, F-92506 Ruell
Malmaison Cedex (FR)**

(84) Designated Contracting States: **FR**

(71) Applicant: **Ford Motor Company, The American Road,
Dearborn, MI 48121 (US)**

(84) Designated Contracting States: **BE**

(72) Inventor: **Rumpel, Manfred, 4494 Chamberlain Drive,
Birmingham Michigan 48010 (US)**

(74) Representative: **Messulam, Alec Moses et al, A.
Messulam & Co. 24 Broadway, Leigh on Sea Essex
SS9 1BN (GB)**

(84) Designated Contracting States: **BE DE FR GB**

(54) Shear mount assembly for a strut-type automotive suspension.

(57) A double isolated shear mount assembly for a MacPherson strut-type automotive suspension includes a first isolator (26) attached to the strut piston rod (24) and a second isolator (38) attached to the vehicle chasis and means (34, 36) for connecting the upper end of the vehicle's suspension spring (20) and first isolator (26) to the second isolator (38).

# SHEAR MOUNT ASSEMBLY FOR A STRUT-TYPE
# AUTOMOTIVE SUSPENSION

This invention relates generally to a shear mount assembly for a strut type automotive suspension.

Strut-type automotive suspension systems have been used in a variety of forms. This invention pertains to the MacPherson type described in U.S. Patent 2,660,449, in which a strut rigidly attached to the wheel carrier includes a coil spring. This design includes a flexible or pivotable mounting between the upper end of the strut and the chassis or body. This pivotable mounting is required to accommodate movement of the strut during suspension jounce and rebound as well as during wheel recession. Because the struct performs a dynamic load carrying function, the previously described upper strut mounting must be carefully designed so as to avoid unnecessary vehicle ride harshness and noise.

Known upper mounts have used elastomeric isolators to isolate the piston rod from the vehicle body. U.S. Patent No. 3,279,782 (Schick) discloses an onion shaped rubber mount which is secured within a casing bolted onto the vehicle body. U.S. Pat. No. 3,482,829 (Kidby) U.S. Pat. No. 3,589,701 (Gee) and U.S. Pat. No. 4,105,222 (Buckwald) disclose annular elastomeric pads connecting the top end of the piston rod to the vehicle body.

It is also known to have a jounce bumper mounted above the MacPherson strut cylinder about the piston rod and below the elastomeric isolator which secures the piston rod to the body. Examples of four such devices are disclosed in U.S. Pat. No. 3,346,272 (Smith) U.S. Pat. No. 3,941,401 (Allison) U.S. Pat. No. 4,042,259 (Fiedler et al) and U.S. Patent No. 4,274,655 (Lederman).

In addition, it is also known to isolate vibrations of the MacPherson strut from the vehicle body by the use of an isolator which is situated above and below a vehicle mounting plate. One such device is disclosed in U.S. Pat. No. 3,573,880 (Sakai).

Lastly, U.S. Pat. No. 4,298,193 (Mourray), discloses an upper mounting arrangement for a MacPherson strut having multiple elastomeric pads and retaining plates.

The present invention seeks to provide a shear mount assembly offering improved isolation of the strut force impact inputs to the chassis so as to enhance the quality of the ride.

In accordance with the present invention, there is provided shear mount assembly as herein set forth in Claim 1.

The invention will now be described further, by way of example with reference to the accompanying drawings, in which:

Figure 1 is a front elevation of a vehicle suspension showing a MacPherson strut embodying the upper mount of the instant invention, and

Figure 2 is an expanded cross sectional view of the upper mount of Figure 1.

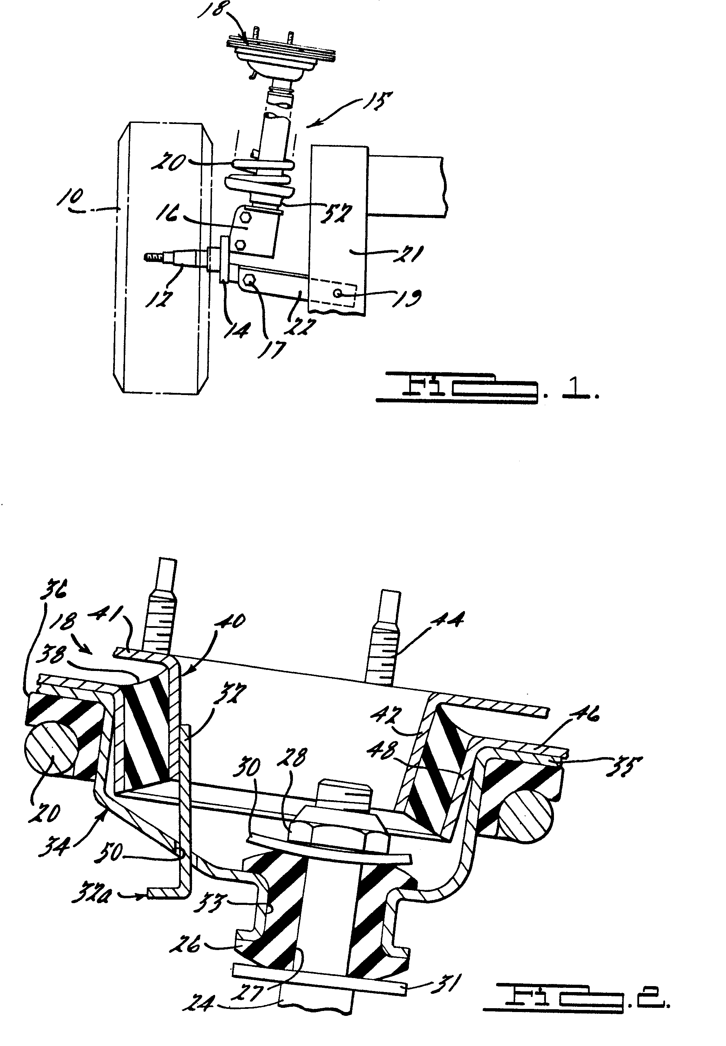

As shown in Figure 1, the mounting assembly of the present invention is intended to be used to attach the upper end of a MacPherson strut to an automotive chassis. The suspension of Figure 1 includes a wheel and tire assembly 10 rotatably mounted on spindle 12 which is attached to wheel carrier 14. Wheel carrier 14 is in turn attached to lower control arm 22 by pivot 17 and to cylinder assembly 15. Lower control arm 22 is attached to chassis 21 by pivot 19. Suspension spring 20 is mounted between seat 52, which is mounted on the lower end of cylinder assembly 15 and upper strut mount 18. Lower strut mount 16 is rigid with respect to wheel carrier 14. Upper strut mount 18 is, according to this invention, capable of accommodating pivotal movement of the strut during suspension jounce, rebound, and recession, while at the same time providing isolation of force inputs to the chassis.

As shown in Figure 2, the mounting assembly of the present invention comprises first isolator 26 attached to the upper end of strut piston rod 24, mounting plate 40 attached to the chassis and having projection 42 depending therefrom, second isolator 38 mounted about the outer circumference of projection 42, and cup-shaped member 34 and mounting plate 46 connecting the first and second isolator. Third isolator 36 and coil spring 20 are seated against upper rim 35 of cup-shaped member 34.

First isolator 26 is generally annular in shape and has central aperture 27 for retaining upper end 24 of the strut piston rod.

Cup-shaped member 34 is comprised of aperture 33 for retaining first isolator 26 and upper rim 35 against which the upper end of spring 20 is loaded. Horizontal annular flange 46 is mounted to upper rim 35. Flange 48 depends from horizontal annular flange 46 which is welded or bolted to upper rim 35 of cup-shaped member 34. Flange 48 may have the shape of a truncated cone or cylinder.

Second isolator 38 is desirably of frustroconical or cylindrical shape and is attached at its outer circumference to flange 48. The inner circumference of second isolator 38 is mounted about the outer circumference of frustroconical projection 42 which depends from flanged portion 41 of mounting plate 40.

Studs 44 are provided in flanged portion 41 of mounting plate 40 for attaching the mount of the present invention to the chassis.

Rebound stop 32 is rigidly attached to, and depends from, frustroconical projection 42 of mounting plate 40. The rebound stop extends through aperture 50 in cup-shaped member 34 and terminates in hook 32(a).

During operation of the present mount, upwardly directed suspension impacts transmitted through coil spring 20 and which would otherwise result in undesired vibration or noise will first be absorbed by third isolator 36 and subsequently by second isolator 38. Unlike some prior designs in which the isolator attached to the piston rod is also loaded by spring forces, first isolator 26 receives no preload from suspension spring 20.

During suspension jounce or rebound, forces arising from operation of piston and cylinder assembly 15, which would otherwise cause undesired noise or vibration, will act first upon first isolator 26 and will then impinge upon second isolator 38 before being transmitted to the chassis through mounting plate 40. As a result, forces transmitted through suspension spring 20 and piston rod 24 will each be attenuated by passage through two isolators prior to reaching the chassis. This provides an opportunity to "tune" the suspension by varying the composition and size of the three isolators contained in the mounting assembly. The three isolators typically comprise synthetic or natural rubber compounds having empirically selected durometer values in the range of 55-65.

It has been found that the mount of the present invention effectively attenuates noise and vibration carried by higher frequency, lower amplitude excitations such as those produced by roughened concrete road surfaces. Cup-shaped member 34 functions as a damping mass in this regard and for this reason the weight of the cup-shaped member may be changed along with the composition of the elastomeric isolators to achieve the desired system tuning. This tuning will permit the mount of the present invention to break the noise path between the suspension and the vehicle's chassis.

Rebound stop 32 functions to prevent excessive forces from developing within second isolator 38 by restraining the movement of cup-shaped member 34 in a downward direction during pronounced rebound movement.

As seen in Figure 2, first isolator 26 and second isolator 38 will each be subjected to axially directed shear loading during suspension jounce and rebound, whereas isolator 36 will be subjected almost entirely to compressive type loading. However, isolators 26 and 38 will each be subjected to limited mixed loading containing both shearing and compressive components because isolators 26 and 38 must accommodate movement of piston rod 24 not only during jounce and rebound movement, but also during wheel recession and braking.

The term "chassis" when used in the specification and claims, will be understood to refer to either a conventional vehicle chassis or a conventional unitary chassis and body construction, and is intended to include vehicle structure and components connected to or supported upon the chassis structure and forming part of the sprung portion of the vehicle.

## CLAIMS

1.    A shear mount assembly for connecting the upper end of a suspension strut to a vehicle chassis characterised by a first isolator (26) having an aperture (27) for receiving the upper end of a strut piston rod (24); a mounting plate (40) having a projection (42) depending therefrom and including means (44) for attachment to the chassis; a second isolator (38) mounted about the outer circumference of said projection (42); and means (34,46) for connecting said first isolator (26) and the upper end of a coil suspension spring (20) to the outer circumference of said second isolator (38).

2.    An assembly as claimed in Claim 1, wherein said projection (42) depending from said mounting plate (40) has a generally frustroconical shape.

3.    An assembly as claimed in Claim 1 or Claim 2, wherein said first isolator (26) is generally annular in shape with a central aperture (27) for receiving said upper end of said strut piston rod (24).

4.    An assembly as claimed in any preceding claim, wherein said means (34,46) for attaching said first isolator (26) and said upper end of said spring (20) to the outer circumference of said second isolator (38) comprises a generally cup-shaped member (34) comprising a base with an aperture (33) in which said first isolator (26) is retained and an upper rim (35) against which the upper end of said spring (20) is loaded.

5.    An assembly as claimed in Claim 4, wherein said cup-shaped member (34) is of a mass which is dimensioned to preselect the vibration damping characteristics of the shear mount assembly.

0182478

6. An assembly as claimed in Claim 4 or 5, wherein the means for attaching said first isolator (26) and said upper end of said spring (20) to said second isolator (38) further comprises a member having a horizontal annular flange (46) attached to said upper rim (35) of said cup-shaped member (34) and a generally conical flange (48) depending from said annular flange (46) and attached to the outer circumference of said second isolator (38).

7. An assmebly as claimed in Claim 6, wherein said second isolator (38) is generally frustroconical in shape.

8. An assembly as claimed in Claim 6 or 7, further including a rebound stop (32) comprising a member depending from said mounting plate (40) and means (32A) for causing said member to couple to said cup-shaped member (34) during pronounced rebound movement.

9. An assembly as claimed in Claim 6, 7 or 8, further comprising a third isolator (36) interposed between the top of said spring (20) and said upper rim (35) of said generally cup-shaped member (34).

10. An assembly as claimed in Claim 9, wherein said first, second and third isolators (26,38,36) are formed of resilient elastomeric compounds.

FIG. 1.

FIG. 2.